# EUROPÄISCHE PATENTSCHRIFT

(11) **EP 1 413 129 B1**
(45) Veröffentlichungstag und Bekanntmachung des Hinweises auf die Patenterteilung: **28.10.2009**
(21) Anmeldenummer: 02754383.4
(22) Anmeldetag: 18.07.2002
(51) Int. Cl.: H04N 1/32

(54) **Verfahren und Vorrichtung zur Bestätigung der Echtheit eines Dokumentes und Tresor zur Datenspeicherung**
Method and device for confirming the authenticity of a document and a safe for storing data
Procédé et dispositif pour confirmer l'authenticité d'un document et coffre-fort pour le stockage de données

(30) Priorität: 20.07.2001 DE 10134682
(43) Veröffentlichungstag der Anmeldung: 28.04.2004
(73) Patentinhaber: Thomson Licensing, 92100 Boulogne-Billancourt (FR)
(72) Erfinder: BELKE, Marcus, 53639 Königswinter (DE); BICKENBACH, Hans, Joachim, 59425 Unna (DE); KOCH, Eckard, 45147 Essen (DE); KUBBILUN, Ingo, A., 45134 Essen (DE); KUBBILUN, Wolfgang, 45127 Essen (DE); VORBRUGGEN, Jan, C., 44797 Bochum (DE)
(74) Vertreter: Hartnack, Wolfgang
(86) Internationale Anmeldenummer: PCT/DE2002/002633
(87) Internationale Veröffentlichungsnummer: WO 2003/017641

(56) Entgegenhaltungen:
- WO-A-00/75925
- RINK J: "BILDERGESCHICHTEN" CT MAGAZIN FUER COMPUTER TECHNIK, VERLAG HEINZ HEISE GMBH., HANNOVER, DE, Nr. 8, 1. August 1997 (1997-08-01), Seiten 162-164,166-16, XP000697503 ISSN: 0724-8679
- MINTZER F ET AL: "Effective and ineffective digital watermarks" IMAGE PROCESSING, 1997. PROCEEDINGS., INTERNATIONAL CONFERENCE ON SANTA BARBARA, CA, USA 26-29 OCT. 1997, LOS ALAMITOS, CA, USA,IEEE COMPUT. SOC, US, 26. Oktober 1997 (1997-10-26), Seiten 9-12, XP010253686 ISBN: 0-8186-8183-7

## Beschreibung

Die Erfindung betrifft ein Verfahren zur Bestätigung der Echtheit eines Dokumentes.

Die Erfindung betrifft ferner eine für die Durchführung des Verfahrens geeignete Vorrichtung.

Ein bekanntes Verfahren zur Erzeugung von digitalen Signaturen wird von der Deutschen Post AG unter der Bezeichnung Signtrust angeboten.

In der US-Patentschrift 4 405 829 ist ein Verfahren der asymmetrischen Kryptographie bekannt. Dieses bekannte Verfahren dient zur Verschlüsselung und digitalen Signierung und damit der Sicherung der Authentizität und Integrität des digitalen Dokumentes mit Hilfe eines Schlüsselpaares. Die Asymmetrie des kryptographischen Verfahrens wird hierbei durch ein Primfaktorenzerlegungs-Problem erzielt.

Ferner ist es bekannt, elliptische Kurven für die asymmetrische Kryptographie einzusetzen.

Ferner ist es bekannt, durch den Einsatz von Trust Centern, beziehungsweise einer certificate authority einen spezifischen öffentlichen Schlüssel eindeutig einer natürlichen oder juristischen Person zuzuordnen.

Ferner existieren Standards über die Zuordnung des Schlüssels und die Durchführung des Verfahrens. Ein bekannter Standard sind ISO/IEC IS X.509 und PKCS # 11.

Ferner sind Verfahren zur Erzeugung eines sicheren Hash-Wertes oder eines message digest bekannt. Hierbei wird aus einem Dokument oder Bestandteilen des Dokumentes ein Stellvertreterwert ermittelt, der als Nachweis für die Echtheit des Dokumentes dient.

Ferner ist es bekannt, Kennungsinformationen in digitale Wasserzeichen zu integrieren. Diese Integration erfolgt so, dass die Information nur mit einem Schlüssel rekonstruierbar und ansonsten nicht wahrnehmbar ist.

Aus dem Artikel S. Katzenbeisser & F.A.P. Petitcolas, Information Hiding Techniques for Steganography and Digital Watermarking, Artech House, Norwood, MA, USA, 2000 ist die Verknüpfung zusätzlicher Informationen, die auch als Metadaten bezeichnet werden, bekannt. Die Metadaten sind ohne den Einsatz von Hilfsmitteln nicht wahrnehmbar untrennbar mit einem digitalen Dokument verbunden.

Aus der Deutschen Patentschrift DE 195 219 69 Cl und der Europäischen Patentschrift EP 0 879 535 B1 ist ein Verfahren zur Markierung binär codierter Datensätze bekannt. Hierbei wird ein zu markierender Datensatz in Blöcke von Pixeln zerlegt, wobei die Pixel mittels einer Transformationsfunktion vom Ortsraum in den Frequenzraum transformiert werden. Ferner erfolgt hierbei eine diskrete Positionsfolge zur Implementierung von Informationseinheiten in den zu markierenden Datensatz unter Berücksichtigung eines Schlüssels sowie datensatzspezifischer Eigenschaften. Die zu implementierende Informationseinheit wird an die durch die Positionsfolge festgelegten Positionen im Datensatz geschrieben. Hierdurch ist das digitale Wasserzeichen in der Lage, beliebige binär kodierte Informationen variabler Länge aufzunehmen und in robuster und fälschungssicherer Weise in das Dokument einzubringen.

Aus der Internationalen Patentanmeldung WO 99/57885 und der US-Patentschrift 6 243 480 ist ein Verfahren zur digitalen Echtheitsbestätigung analoger Dokumente bekannt. Bei dem Verfahren dient ein in das Dokument eingebettetes digitales Wasserzeichen als Träger einer Authentisierungsinformation. Das dargestellte digitale Wasserzeichen übersteht Medienbrüche. Ferner ist in diesem Verfahren die Verwendung eines Hash-Wertes als Authentisierungswert offenbart.

Aus der Deutschen Offenlegungsschrift DE 198 47 943 A1 ist ein Verfahren zum Generieren von digitalen Wasserzeichen für elektronische Dokumente bekannt, wobei ein Nachweis der wahren Urheberschaft der Dokumente anhand von digitalen Wasserzeichen erfolgt. Hierbei wird zur Verbesserung der Möglichkeit des Identitätsnachweises das Wasserzeichen mit einem Hash-Wert des Dokumentes versehen.

Ein weiteres bekanntes Verfahren zum Einbringen eines digitalen Wasserzeichens ist in dem Artikel R.G. van Schyndel, A.Z. Tirkel, C.F. Osborne, A Digital Watermark. First IEEE International Conference on Image Processing, Vol. II, S. 86-90. Austin, Texas USA, 1994, dargestellt. Dieses Verfahren sieht die Einbringung eines digitalen Wasserzeichens in ein Bild vor, indem das niederwertigste Bit eines Bildpunktes verändert wird und damit lediglich minimale Änderungen in das Bild eingebracht werden. Dieses bekannte Verfahren hat jedoch den Nachteil, dass das Wasserzeichen nach einer Manipulation oder Konvertierung des Bildes nicht mehr erkennbar ist.

Hierbei ist es besonders wichtig, das Wasserzeichen so aufzubringen, dass es durch Manipulationen oder Formatierungen des Dokumentes nicht zerstört wird. Zur Lösung dieses Problems ist es bekannt, eine Informationsspeicherung im Frequenzraum vorzunehmen.

Grundsätzlich eignen sich jedoch auch andere Verfahren um manipulationssichere Wasserzeichen, die auch robuste Wasserzeichen genannt werden, aufzubringen.

Dem Artikel J. Rink, "Bildergeschichte", CT Magazin für Computertechnik, Verlag Heinz Heise GmbH, 1.8.1997, Seite 162 ff., ist ein Vergleich verschiedener Softwareprodukte zum Erstellen digitaler Wasserzeichen zu entnehmen. Mit Hilfe der beschriebenen Software können sichtbare und unsichtbarer sowie mit öffentlichen oder geheimen Schlüsseln auslesbare Wasserzeichen in ein Dokument eingebracht werden, die zumeist Copyright- Vermerke beinhalten. Einige Programme ermöglichen ebenso das Einbringen mehrerer mit verschiedenen Schlüsseln auslesbarer Wasserzeichen in ein Dokument.

Der Artikel "Effective and ineffective digital watermarks" in Proceedings to International Conference on Image Processing, Santa Barbara, CA, USA, 26.-29.10.1997 von F. Mintzer et al. beschreibt verschiedene Anwendungen für digitale Wasserzeichen und die bei der jeweiligen Anwendung an das Wasserzeichen zu stellenden Anforderungen. Je nach Anwendungsszenario sollte das Wasserzeichen dabei für einen Betrachter sichtbar oder unsichtbar sein, sowie robust oder sensibel gegenüber verschiedenen Manipulationen der mit dem Wasserzeichen versehenen Daten sein.

Ferner sind in der internationalen Patentanmeldung WO 00/75925 A1 ein Verfahren und Systeme zum Schutz von Daten offenbart, die digitale Signaturen und Wasserzeichen verwenden. Bei dem Verfahren werden Daten mit einem ersten Wasserzeichen und einem weitere eine digitale Signatur enthaltenden Wasserzeichen versehen, wobei die Signatur einen Hash- Wert der Daten enthält. Zur Überprüfung werden die Daten auf das Vorhandensein des die Signatur enthaltenden Wasserzeichens überprüft. Falls dieses gefunden wird, wird die Signatur extrahiert und mit ihrer Hilfe wird überprüft, ob die Daten missbräuchlich verändert wurden. Falls das die Signatur enthaltende Wasserzeichen nicht gefunden wird, werden die Daten auf das Vorhandensein des ersten Wasserzeichens hin überprüft, wobei das Vorhandensein des ersten Wasserzeichens bei fehlenden weiteren Wasserzeichen darauf hindeutet, dass die weiteren Wasserzeichen entfernt oder zerstört wurden. Es.wird ferner ein Computersystem beschrieben, dass einen Zugriff auf Daten ermöglicht, deren Echtheit vor dem Zugriff bestätigt wurde.

Zudem sind Verfahren bekannt, die maschinenlesbare Kodierungen einsetzen, um die Authentisierung von Dokumenten zu erzielen.

Diese Verfahren verwenden maschinenlesbare Barcodes und erhöhen die Fälschungssicherheit bestimmter Dokumente, insbesondere von Banknoten, Schecks, Ausweispapieren und Lotterielosen. Derartige Verfahren sind beispielsweise in der internationalen Patentanmeldung WO 0007356 dargestellt.

Der Erfindung liegt die Aufgabe zugrunde, ein gattungsgemäßes Verfahren zur Bestätigung der Echtheit von Daten so weiterzuentwickeln, dass die Bestätigung der Echtheit möglichst zuverlässig erfolgt.

Erfindungsgemäß wird diese Aufgabe durch ein Verfahren gemäß dem Patentanspruch 1 gelöst.

Es ist vorgesehen, dass die Bestätigung der Echtheit mit einer digitalen Signatur erfolgt, dass die signierte Bestätigung der Echtheit in einem geheimen Wasserzeichen in das Dokument und/oder in ein die Echtheit des Dokumentes bestätigende graphische Darstellung eingebracht wird und dass das Dokument zusätzlich mit einem öffentlichen Wasserzeichen markiert wird.

Die Erfindung sieht insbesondere den Einsatz einer sichtbaren graphischen Darstellung und eines sichtbaren Wasserzeichens, vorzugsweise eines Siegels, als Träger eines nicht sichtbaren Wasserzeichens vor.

Die Information wird mit einem geeigneten Schlüssel verschlüsselt.

Der Begriff Dokument ist in seiner weitesten Bedeutung zu verstehen. Er umfasst beliebige Datensätze, insbesondere Datensätze, die zusammenfassbar sind. Insbesondere hat der Begriff des Dokumentes in der vorliegenden Erfindung die Bedeutung einer Einheit aus einem oder mehreren Datensätzen und schließt Ton- und Videoaufnahmen mit ein.

Neben den Urkunden sind Ton- oder Bilddarstellungen einschließlich multimedialer Werke weitere wichtige Beispiele für derartige Dokumente.

Die Erfindung ermöglicht es, Dokumente zu erstellen, welche die Vorteile analoger Dokumente mit den Vorteilen digitaler Dokumente vereinbaren.

Insbesondere beinhaltet die Erfindung die Erzeugung von Dokumenten, die ein für einen Benutzer gewohntes Erscheinungsbild aufweisen und so ein hohes Vertrauensniveau bei dem Benutzer beinhalten. Hierdurch ist auch eine Plausibilitäts- und Offensichtlichkeitsprüfung ohne technische Hilfsmittel möglich, beispielsweise die erste Überprüfung eines Ausweisdokumentes durch einen Pförtner. Außerdem sind die Dokumente handhabbar, beispielsweise auf Medien ausdruckbar oder transportierbar. Ferner können sie ohne den Einsatz von technischen Hilfsmitteln gelesen werden. Außerdem lassen sich verschiedene Schutzniveaus realisieren, beispielsweise gestaffelt nach Standardtexten, schriftlichen Verträgen und notariell beglaubigten Verträgen. Außerdem sind die Dokumente leicht zu erstellen und zu handhaben.

Die erfindungsgemäßen Dokumente weisen außerdem die Vorteile digitaler Dokumente auf, wie eine einfache und sichere Authentisierung. Außerdem ist der Integritätsschutz sicher und einfach. Auch die Erstellung beglaubigter Kopien ist schnell, einfach und mit geringem technischem Aufwand möglich. Dies gilt ebenso für die Versendung des Dokumentes. Außerdem ist die Archivierung der Dokumente schnell, sicher und an mehreren Orten gleichzeitig möglich.

Außerdem vermeidet die Erfindung die bekannten Nachteile der analogen Dokumente und der digitalen Dokumente. Beispielsweise ist für die Integritätsprüfung eine dokumentexterne Information, beispielsweise über Format, Papierqualität, Siegelbild, erforderlich. Ferner kann die Überprüfung ohne spezielle Kenntnisse, Fertigkeiten oder spezielle Geräte, wie UV-Lampen erfolgen.

Weitere Vorteile der Erfindung sind, dass die digitale Signatur visuell dargestellt werden kann, so dass auch der Unterzeichner eine Bestätigung der Vornahme der Unterschrift erhält. Außerdem ist ein verifizierbarer Ausdruck möglich. Die Erfindung ermöglicht eine Visualisierung der digitalen Signatur, sowohl in der digitalen als auch in der analogen Form eines Textdokumentes. Außerdem wird eine untrennbare Verbindung des Textdokumentes mit der digitalen Signatur sowohl in der digitalen als auch in der analogen Form des Textdokumentes erzielt.

Außerdem wird die Möglichkeit eröffnet, der analogen Form eines ursprünglich digital vorliegenden Dokumentes die gleiche Rechts- und Beweiskraft zu verleihen wie der digitalen, signierten Form des gleichen Dokumentes. Dies entspricht der Möglichkeit, die digitale und die analoge Form des Dokumentes in ihrem Einsatz gegeneinander auszutauschen und so gleiche Ausmaße der Authentizität und Integrität sicher zu stellen.

Außerdem ermöglicht die Erfindung ein in analoger Form vorliegendes Dokument, wie beispielsweise eine Urkunde, einen Vertragstext oder einen amtlichen Bescheid unter Wahrung seines Rechtsstatus, beziehungsweise seines Sicherheitsstandards, in eine digitale Form zu überführen und damit die Vorteile digitaler Dokumente verfügbar zu machen.

Außerdem werden so der umfassende Integritätsschutz und die Authentisierungsgarantie der digitalen Signatur auf analog erfassbare Dokumente ausgedehnt.

Zur Erhöhung der Sicherheit der Bestätigung der Echtheit ist es zweckmäßig, dass eine für das Dokument charakteristische Information gewonnen und das geheime Wasserzeichen so erzeugt wird, dass es die Information oder einen Teil davon enthält.

Vorteilhafterweise wird hierbei das Verfahren so durchgeführt, dass die Information einen Hashwert beinhaltet.

Ferner ist eine Überbeglaubigung der jeweiligen Signatur möglich. Die Funktion des Überbeglaubigens wird zweckmäßigerweise dadurch realisiert, dass eine Überbeglaubigung der Signatur erfolgt.

In einer ersten zweckmäßigen Ausführungsform dieser Variante erfolgt die Überbeglaubigung dadurch, dass das signierte Dokument erneut - von einer zur Überbeglaubigung befugten Stelle - digital übersigniert wird.

Alternativ, beziehungsweise gegebenenfalls zusätzlich, ist es zweckmäßig, dass die Vornahme der Bestätigung der Echtheit in einer separaten Datei gespeichert wird.

Vorzugsweise wird diese Ausführungsform so weiterentwickelt, dass die Datei und/oder die beglaubigten Daten an ein Trust-Center übermittelt werden.

Mit Hilfe des erfindungsgemäßen Verfahrens sind verschiedene Formen der Bestätigung der Echtheit von Dokumenten möglich. Beispielsweise kann ein Aussteller eines Dokumentes die Echtheit mit seiner eigenen Unterschrift bestätigen.

Besonders bevorzugte Durchführungsformen der Erfindung betreffen die Beglaubigung der Daten, bei denen die Echtheit der Daten in einer speziellen Form beglaubigt wird. Hierzu ist es zweckmäßig, das Verfahren so durchzuführen, dass in dem Trust-Center überprüft wird, ob die digitale Signatur zu einer Person gehört, die zu einer Bestätigung der Echtheit von Dokumenten befugt ist.

Zweckmäßigerweise wird dieses Verfahren so durchgeführt, dass überprüft wird, ob Angaben zu der Person in einem Verzeichnis gespeichert sind.

Vorteilhafterweise wird das Verfahren so durchgeführt, dass das Trust-Center eine Bestätigung über die Berechtigung des Inhabers der Signatur zur Bestätigung der Echtheit von Dokumenten erstellt.

Eine derartige Bestätigung kann auf verschiedene Weisen erfolgen. Beispielsweise bescheinigt das Trust-Center, dass die Bestätigung der Echtheit durch eine Bescheinigungsstelle erfolgte, die in einer Liste hierzu berechtigter Bescheinigungsstellen eingetragen wurde.

Um die Beweiskraft der Echtheit der Daten zu erhöhen, ist es zweckmäßig, dass die Bestätigung der Berechtigung des Signierenden zur Beglaubigung von Dokumenten durch das Trust-Center mit einer digitalen Signatur bestätigt wird, zum Beispiel durch ein Zertifikat.

Besonders vorteilhafte Ausführungsformen des Verfahrens zeichnen sich dadurch aus, dass sie einen Schlüssel verwenden, um das Wasserzeichen in das Dokument einzubringen und auszulesen; in diesem Sinne ist es den typischen symmetrischen Verschlüsselungsverfahren ähnlich. Im Rahmen einer Anwendung muss dieser Schlüssel - im Folgenden zur besseren Unterscheidung auch Wasserzeichenschlüssel genannt - von dem Schlüsselpaar unterschieden werden, das zur Signatur, beziehungsweise Verschlüsselung der im Wasserzeichen enthaltenen Nachricht verwendet wird, und für das alle Möglichkeiten eines Verschlüsselungssystems mit öffentlichen Schlüsseln eingesetzt werden können.

Es ist bekannt, digitale Wasserzeichen einzusetzen, um eine missbräuchliche Erstellung von Kopien eines Dokumentes zu verhindern. Hierbei bringt der Inhaber ein Wasserzeichen mit einem auf ihn hinweisenden Vermerk in ein Dokument ein. Eine bekannte Variante dieses Verfahrens sieht vor, dass bei Übermittlung des Dokumentes an einen Kunden ein weiteres, kundenspezifisches Wasserzeichen in das Dokument eingebracht wird.

Vorzugsweise wird die Signatur in einem der zuvor erzeugten Wasserzeichen und/oder als Bestandteil eines weiteren Wasserzeichens in die Daten eingebracht.

Die Funktion des Trust-Centers kann auf verschiedene Weisen vorgenommen werden. Beispielsweise kann ein Trust-Center eingesetzt werden, wie es beispielsweise in Deutschland von der Deutschen Post AG betrieben wird.

Das Trust-Center kann Bestätigungs- oder Bescheinigungsaufgaben sowohl für den Bestätiger der Echtheit der Daten als auch für andere Stellen durchführen. Beispielsweise ist ein Einsatz des Trust-Centers zur Vornahme von Überbeglaubigungen möglich. Bei einer Überbeglaubigung wird die Berechtigung des Beglaubigenden zur Vornahme von Beglaubigungen bestätigt.

Die Berechtigung zur Vornahme von Überbeglaubigungen ist in einer besonders bevorzugten Ausführungsform in Zertifikatsattributen enthalten.

Während die bekannten Überbeglaubigungen nichttechnische Verfahren sind, bei denen manuell überprüft wird, ob eine Bescheinigungsstelle zur Beglaubigung von Dokumenten berechtigt ist, handelt es sich bei dieser bevorzugten Ausführungsform des erfindungsgemäßen Verfahrens um ein technisches Verfahren, weil es ohne menschliche Tätigkeiten vollständig automatisiert erfolgen kann.

Die Erzeugung eines weiteren Wasserzeichens zu einer Überbeglaubigung der Dokumente ermöglicht vollautomatisierte Echtheitsbestätigungen. Die Echtheitsbestätigungen werden dabei jeweils in der rechtlich hierzu passenden Form ausgestellt, wobei beispielsweise bei Gesetzesänderungen lediglich allenfalls geringe Änderungen'in den Trust-Centern erforderlich sind. Beispielsweise können die erstellten weiteren Wasserzeichen die Funktion von Apostillen wahrnehmen. Beispielsweise bestätigt der Präsident eines zuständigen Gerichts, dass die Bescheinigungsstelle zur Beglaubigung von Daten berechtigt ist.

Bei den Dokumenten kann es sich beispielsweise auch um multimedial erzeugte Dokumente wie Videoclips handeln. Auch hierbei ist eine Überprüfung des Erzeugers und der Unverändertheit (Integritätsprüfen) zweckmäßig. Sowohl die Authentisierung als auch die Integritätsprüfung sind zentrale Anwendungsgebiete eines Verschlüsselungssystems mit öffentlichen Schlüsseln. Ein digitales Wasserzeichen kann als Kanal für die notwendige Signatur dienen mit den zusätzlichen Eigenschaften, dass es nicht vom Dokument getrennt werden und derart entworfen werden kann, dass es einen Medienbruch übersteht.

Eine weitere Erhöhung der Datensicherheit erfolgt dadurch, dass die digitale Signatur als ein weiteres Wasserzeichen in die Daten eingebracht wird.

Ferner ist es vorteilhaft, dass das geheime Wasserzeichen Metainformationen enthält.

Eine Ergänzung der eingesetzten Sicherheitsmerkmale kann zweckmäßigerweise dadurch erfolgen, dass das öffentliche Wasserzeichen in einem graphischen Symbol eingebettet ist, wobei das graphische Symbol erkennbar die Authentizität des Dokumentes bestätigt und dabei so viele Informationen aufnimmt, wie das Wasserzeichen sicherheitsrelevante Informationen aufnehmen kann.

Zur weiteren Erhöhung der Sicherheit der Bescheinigungen ist es zweckmäßig, dass, bevor das Dokument zusätzlich mit dem öffentlichen Wasserzeichen markiert wird, überprüft wird, ob das öffentliche Wasserzeichen eine ausreichende Menge an Sicherheitsinformationen aufnehmen kann.

Um eine Urheberschaft an dem Dokument leichter beweisen zu können, ist es vorteilhaft, dass der Zeitpunkt der Bestätigung der Echtheit von Daten erfasst wird.

Zweckmäßigerweise wird das Verfahren so durchgeführt, dass der Zeitpunkt in das geheime Wasserzeichen eingebracht wird.

Um den Zeitpunkt noch einfacher und zuverlässiger nachweisen zu können, ist es vorteilhaft, dass der Zeitpunkt durch einen digitalen Zeitstempel verifiziert wird.

Ein besonders sicherer und zuverlässiger Beweis des Zeitpunktes der Beglaubigung erfolgt dadurch, dass ein Trust-Center einen sicheren Zeitstempel erzeugt. Vorzugsweise ist der Zeitstempel digital signiert.

Nachfolgend werden einzelne vorteilhafte Schritte für die Bestätigung der Echtheit der Daten dargestellt. Eine Kombination der einzelnen dargestellten Schritte ist besonders vorteilhaft, jedoch nicht erforderlich.

Der Wasserzeichenschlüssel sollte für jedes Dokument verschieden sein - zum Beispiel, indem er aus dem Inhalt des Dokumentes abgeleitet wird - muss aber öffentlich zugängig sein, etwa über einen auf einem Verschlüsselungssystem mit öffentlichen Schlüsseln basierenden Registrierungsdienst. Damit ist das Wasserzeichen nicht mehr robust gegen Versuche der Entfernung.

Die eingebrachten Nachrichten entsprechen denen einer üblichen digitalen Signatur, können aber aus Kapazitätsgründen in verkürzter Form verwendet werden.

Die Nachrichten werden mit dem privaten Schlüssel des Autors verschlüsselt.

Das Auslesen des Wasserzeichens und die Entschlüsselung der Nachrichten kann von einem beliebigen Dritten vorgenommen werden, der über Zugriff auf die notwendigen Schlüssel (Wasserzeichenschlüssel und zugehöriger öffentlicher Schlüssel) verfügt.

Ferner ist es zweckmäßig, in die Wasserzeichen weitere Informationen (Metainformationen) einzubringen und zu übertragen.

Die Dienste eines Trust Centers, insbesondere in der Verbindung der asymmetrischen Kryptographie mit digitalen Wasserzeichen, eröffnen ein weites Anwendungsspektrum. So kann von einer gegenseitigen Katalysatorfunktion in Bezug auf die Verbreitung von Anwendungen und verstärkter Akzeptanz seitens der Anwender gesprochen werden.

Das Trust-Center bietet neben seiner Bestätigungsfunktion weitere Dienstleistungen, beispielsweise die Infrastruktur eines Verschlüsselungssystems mit öffentlichen Schlüsseln und spezielle Dienste, wie beispielsweise Signieren, Verschlüsseln, Entschlüsseln und Bestätigen von Uhrzeiten und anderen Zeitdaten (Zeitstempeldienst).

Das digitale Wasserzeichen stellt - isoliert betrachtet - einen Bezug zu der Person oder Körperschaft her, die eine Wasserzeicheneinbettung vorgenommen hat. Durch die Identitätsüberprüfung und die damit verbundene Ausstellung von Zertifikaten durch das Trust Center eignen sich digitale Wasserzeichen hervorragend zur Bindung an eine Identität.

Es existieren prinzipiell private, öffentliche und partiell-öffentliche digitale Wasserzeichen nebeneinander. Die erstgenannte Kategorie kann nach der Einbettung nur von demjenigen wieder sichtbar gemacht werden, der die ursprüngliche Einbettung vornahm. Die Art der Einbettung wird dabei durch ein geheimes Passwort, vorzugsweise einen symmetrischen Schlüssel, bestimmt.

Sofern das geheime Passwort begründet an Dritte (selektiv) weitergegeben wird, benötigt man einen sicheren Kommunikationskanal. Dieser kann durch die Anwendung der asymmetrischen Kryptographie - vergleichbar mit der Versendung von vertraulichen e-mails - hergestellt werden.

Die durch das Trust Center über die SEA-Card bereitgestellten Dienste wie digitales Signieren und asymmetrisches

Verschlüsseln und Entschlüsseln eröffnen auf zwei Ebenen ausgezeichnete Möglichkeiten, das digitale Wasserzeichen als Vehikel für vertrauliche und integere Informationen zu benutzen.

Zum einen können die einzubettenden Daten verschlüsselt und/oder signiert werden. Zum anderen dienen die kryptographischen Verfahren dem vertrauenswürdigen Austausch von symmetrischen Schlüsseln und beispielsweise auch dem Nachweis der Urheberschaft (bekannt als "IPR" = Intellectual Property Rights) eines digitalen Werkes durch die Involvierung von digitalen Signaturen des beteiligten digitalen Trägermediums.

Der Zeitstempeldienst des Trust Centers findet schließlich Anwendung bei Beweissicherungsvorgängen: Soll beispielsweise ein digitales Werk bei Signtrust registriert werden, so muss der Zeitpunkt des Eingangs bei Signtrust festgehalten werden, um der Registrierung einen rechtsverbindlichen Charakter zu verleihen.

Das digitale Wasserzeichen erfüllt ein oder mehrere der nachfolgend genannten Merkmale:
1. Markierung verschiedener Medientypen
2. Untrennbarkeit von eingebettetem Datum und Trägermedium
3. Überwindung von Medienbrüchen (z.B. bei Drucken und Scannen)
4. Unsichtbarkeit der eingebetteten Information

Generell besteht bei digitalen Medien das Problem, dass die Trennung der digitalen Datenmenge und der zugehörigen digitalen Signatur jederzeit möglich ist. Das folgende Beispiel verdeutlicht, wie dieser unerwünschte Nebeneffekt eliminiert werden kann.

Der Autor eines PDF-Dokumentes möchte beispielsweise dessen Integrität sicherstellen. Das Dokument enthält mindestens eine Grafik oder ein Logo. Der Autor kann nun den enthaltenen Text digital signieren und die Signatur als digitales Wasserzeichen in eine Abbildung des Dokumentes einbetten. Über die im Dokument enthaltene (textuelle) Identität des Autors kann dessen Zertifikat bei Signtrust erfragt und die Verifikation der Integrität durchgeführt werden.

Die Überwindung von Medienbrüchen ermöglicht die Erhaltung von eingebetteten Informationen auch auf analogen Trägermedien (Papier, Magnetbändern, Videokassetten).

Die Unsichtbarkeit der eingebetteten Information erfüllt die Anforderung, die visuelle Wahrnehmung des digitalen Objekts durch einen menschlichen Betrachter nicht zu stören. Außerdem wird durch die Unsichtbarkeit die Sicherheit erhöht.

Durch die Transformation der digitalen Signatur in ein digitales Wasserzeichen entsteht ein Wasserzeichen, das durch die Anwendung der Dienste eines Trust Centers eine hohe Vertrauenswürdigkeit erreicht. Vom Standpunkt der Technologie der digitalen Wasserzeichen aus betrachtet, können somit neue Anwendungen der Wasserzeichen konstruiert werden, die einen rechtsverbindlichen Charakter aufweisen. Die konträre Sichtweise führt zu einer Erweiterung der bestehenden Dienste des Trust Centers sowie zu der Entwicklung neuer Trust Center-Dienste.

Ein digital Signierender erhält zum Beispiel bei einer

Realisierung des E-mail-Plug-Ins eine zusätzliche Funktion durch die Möglichkeit zur Einbettung digitaler Wasserzeichen beim Versenden von schützenswerten E-mail-Attachments.

Das Trusted Digital Watermarking ebnet den Weg zu weiteren Anwendungsfeldern. Insbesondere stellt die Eigenschaft der Wasserzeichen, Medienbrüche zu überwinden, einen besonders wichtigen Faktor dar. Es sind insbesondere Anwendungsfälle relevant, in denen authentifizierte Dokumente in Papierform notwendig sind. Der Authentifikation wird dabei durch eine digitale Signatur Rechtscharakter verliehen.

Weitere Synergie-Effekte des Trust Centers und der Erzeugung von Wasserzeichen sind in der Benutzung der Verschlüsselungssysteme mit öffentlichen Schlüsseln zum sicheren Austausch von symmetrischen Schlüsseln privater digitaler Wasserzeichen sowie in der Vertrauensetablierung eingebetteter Daten begründet.

Durch die Erfindung werden Beglaubigungsvorgänge vereinfacht. Ferner ist es durch die erfindungsgemäßen Verfahren möglich, die Echtheit eines Dokumentes nur ein einziges Mal zu bestätigen und die Bestätigung der Echtheit beliebig oft nutzen zu können. Ein digital beglaubigtes Dokument kann so an beliebig viele Personen, Kunden, etc. weitergegeben werden.

Die Involvierung eines Zeitstempeldienstes bei der Einbettung digitaler Wasserzeichen, beziehungsweise bei der Registrierung von digital markierten Daten, stellt einen weiteren Vorteil dar. Vor allem in Bezug auf IPR-Dienste wie zum Beispiel die Registrierung von digital markiertem Material zur Beweissicherung bei etwaigen Rechtsstreitigkeiten ist die Anbringung eines Zeitstempels obligatorisch.

Ein weiterer Gegenstand der Erfindung ist ein elektronischer Tresor zur Aufnahme von digitalen Dokumenten, der sich dadurch auszeichnet, dass er einen Schreibzugriff nur für solche Dokumente erlaubt, die eine in einem digitalen Wasserzeichen enthaltene digitale Signatur aufweisen.

Dieser elektronische Tresor eignet sich insbesondere zur Aufnahme der erfindungsgemäß bearbeiteten elektronischen Dokumente.

Die Erfindung betrifft ferner elektronische Dokumente, die sich dadurch auszeichnen, dass es ein geheimes Wasserzeichen und ein öffentliches Wasserzeichen enthält.

Hierbei ist es besonders vorteilhaft, dass das geheime Wasserreichen in das öffentliche Wasserzeichen eingebracht ist.

Derartige Dokumente werden vorzugsweise mit den hier dargestellten Verfahrensschritten hergestellt.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Zeichnungen.

Von den Abbildungen zeigt
- Fig. 1: eine Prinzipdarstellung eines erfindungsgemäßen Verfahrens zur Ausstellung von digitalen Dokumenten;
- Fig. 2: eine Prinzipdarstellung einer Einreichung von digitalen Dokumenten;
- Fig. 3: eine Prinzipdarstellung eines erfindungsgemäßen Verfahrens zur Beglaubigung von Dokumenten;
- Fig. 4: Verfahren zur Beglaubigung eines Dokumentes;
- Fig. 5: Verfahren zur Überprüfung der Echtheit eines beglaubigten Dokumentes;
- Fig. 6: einen Einsatz eines erfindungs- gemäßen Verfahrens zu Massenausgaben von Dokumenten.

Die dargestellten Abbildungen zeigen bevorzugte Ausführungsformen eines mehrstufigen Verfahrens, das mehrere Schritte umfasst, vorzugsweise die Erzeugung eines Dokumentes, seine digitale Signierung, Einbringung der digitalen Signatur in ein digitales Wasserzeichen, die Integration des digitalen Wasserzeichens in ein Dokument, das Wiedergewinnen des digitalen Wasserzeichens und die Verifikation des Dokumentes anhand der entschlüsselten, digitalen Signatur.

Eine besonders bevorzugte Ausführungsform'dieses Verfahrens umfasst die folgenden Schritte:
Signierung:
   1. Ein zu schützendes digitales Dokument wird digital signiert.
   2. In eine geeignete Graphik wird die digitale Signatur (in Form des verschlüsselten message digest) als digitales Wasserzeichen eingebracht.
   3. Die mit dem digitalen Wasserzeichen versehene Graphik wird in das Dokument integriert.
   4. Das digitale Dokument wird ausgedruckt.
Verifikation:
   5. Das Druckmedium wird digitalisiert.
   6. Aus dem digitalisierten Druckmedium wird der Originaltext (z.B. durch optical character recognition [OCR]) wiedergewonnen.
   7. Aus dem wiedergewonnenen Originaltext wird der message digest berechnet.
   8. Aus dem digitalisierten Druckmedium wird die Graphik extrahiert und das digitale Wasserzeichen wiedergewonnen.
   9. Das digitale Wasserzeichen wird mit Hilfe des öffentlichen Schlüssels des Signierers entschlüsselt.
   10. Der Vergleich der in 7. und 9. erhaltenen Werte bestimmt den Erfolg der Verifikation.

Die Kombination einer Einbringung des geheimen Wasserzeichens in das Dokument und/oder in eine die Echtheit des Dokumentes bestätigende graphische Darstellung in Kombination mit' der Markierung des Dokumentes mit einem öffentlichen Wasserzeichen bewirkt, dass das Verfahren zur Erstellung, beziehungsweise Überprüfung des Dokumentes, mit einer besonders hohen Sicherheit und Zuverlässigkeit erfolgt.

Die Erfindung ermöglicht die Herstellung von Dokumenten, welche die Vorteile von digitalen und analogen Dokumenten vereinen. Die erstellten Dokumente können dabei sowohl aus digitalen Dokumenten als auch aus analogen Dokumenten gewonnen werden.

Beispiele von in digitaler Form vorliegenden Dokumenten sind Texte (in einem beliebigen Format, zum Beispiel ASCII-Text, Formaten eines Textverarbeitungsprogrammes wie Microsoft Word), Bestandteile einer Tabelle, Video- oder Audiodaten oder Computerprogramme.

Beispiele für die analoge Ausgangsform der Dokumente sind Textausdrucke, bestehende Urkunden und Vertragstexte und Behördenbescheide. Diese werden vor der Verarbeitung zunächst digitalisiert, wobei vorzugsweise die Übereinstimmung des Inhaltes des ursprünglichen Dokumentes mit seiner digitalisierten Form von einer hierzu berechtigten Instanz beglaubigt wird.

Das digitale Wasserzeichen kann auf verschiedene Weisen in die es transportierende Graphik eingebracht werden.

Die Graphik kann dabei verschiedene Formen aufweisen, beispielsweise einem traditionellen Siegel entsprechen, den Hintergrund eines Textdokumentes oder die strukturierte oder unstrukturierte Umrandung eines Textes bilden. Ferner ist es möglich, die Graphik in mehreren Einzelgraphiken an verschiedenen Orten in das Dokument einzubringen.

Zusätzlich ist es möglich, den Namen des Signierers oder den Namen des Trust Centers oder Informationen aus dem Zertifikat, wie beispielsweise seine Seriennummer oder eine beliebige Kombination dieser Informationen, sichtbar einzubringen. Die sichtbare Darstellung kann sowohl unmittelbar lesbar sein, beispielsweise bei einem Ausdruck in Schriftform oder auch in maschinenlesbarer Form, zum Beispiel einem Barcode vorliegen.

Aus dem erstellten Dokument kann die analoge Form auf vielfältige Weise ermittelt werden. Hierzu eignen sich jede beliebige Druckmethode und jede beliebige Anzeigemethode.

Beispiele für die Druckmethode sind Verfahren zum Bedrucken von Papier oder Gegenständen, wie Textilien, Holz, Teppich, Metall und Wänden.

Die Anzeige erfolgt über eine analoge oder digitale Schnittstelle, beispielsweise auf einem Fernseh- oder Computer-Bildschirm, einem LCD-Display oder einer Anzeigetafel.

Die Wiedergewinnung des Textes kann gleichfalls auf verschiedene Weisen erfolgen, beispielsweise durch einen Scanner, eine digitale Kamera, einen digitalen Camcorder oder eine WebCam.

Die Integration zusätzlicher Funktionen erhöht die Sicherheit und Zuverlässigkeit des Verfahrens und der mit dem Verfahren hergestellten, beziehungsweise überprüften, Dokumente.

Beispielsweise kann durch die Einbeziehung eines Zeitstempeldienstes eines Trust Centers der Zeitpunkt des Entstehens eines Dokumentes oder eines Vertragsabschlusses dokumentiert werden.

Ferner ist es möglich, verschiedene Sicherheitsstufen zu realisieren.

Die verschiedenen Sicherheitsstufen können beispielsweise durch eine unterschiedliche Granularität der Verifikationselemente erzielt werden. In einer ersten Ausführungsform befindet sich beispielsweise ein Verifikationselement in dem Dokument. Eine höhere Sicherheitsstufe lässt sich beispielsweise dadurch erzielen, dass jede Seite eines Textdokumentes ein Verifikationselement enthält. Bei einer noch höheren Sicherheit ist es zweckmäßig, dass jede semantische Einheit, zum Beispiel jeder Paragraph eines Vertrages oder jedes Feld eines Scheckformulars ein Verifikationselement enthält.

Die Mitteilung der Zertifikatsinformation kann sichtbar oder unsichtbar erfolgen. Ferner ist es möglich, die Zertifikatsinformation als ein zusätzliches Wasserzeichen in das Dokument einzubringen. Die zusätzliche Einbringung eines Message digest in das Wasserzeichen ist gleichfalls vorteilhaft.

Besonders zweckmäßig ist es, sowohl die Zertifikationsinformation als auch den Message digest in das Wasserzeichen einzubringen.

Der message digest ist eine kryptographische Prüfsumme, die zur Sicherstellung der Authentizität des Dokumentes, beziehungsweise des Wasserzeichens oder eines in dem Dokument oder in dem Wasserzeichen enthaltenen Bestandteils dient. Obwohl kryptographische Hash-Funktionen bevorzugte Ausführungsbeispiele für die Ermittlung der kryptographischen Prüfsummen sind, ist der message digest nicht auf Hash-Funktionen beschränkt, sondern umfasst jede kryptographische Prüfsumme unabhängig von den zu ihrer Herstellung oder Entschlüsselung eingesetzten Algorithmen.

In der digitalen Welt kann die Funktion eines amtlichen Siegels durch eine digitale Signatur übernommen werden. Sowohl das Siegel als auch die digitale Signatur verlieren jedoch nach dem Medienbruch ihre Funktion und Wirksamkeit: Der Stempel unter einem Papierdokument kann nach dem Einscannen oder Faxen nicht mehr die Echtheit des Dokumentes bezeugen, umgekehrt verliert die Bitfolge einer'digitalen Signatur nach dem Ausdruck des zugehörigen Dokumentes ihre Funktion.

Durch das digitale Wasserzeichen und dessen Kombination mit der digitalen Signatur wird das Problem des Medienbruchs gelöst. Beim Übergang von der digitalen in die papiergebundene Welt und umgekehrt übernimmt das Wasserzeichen die Funktion eines Echtheitssiegels. Wird ein mit einem digitalen Wasserzeichen versehenes Dokument ausgedruckt und anschließend wieder eingescannt, so sind das Wasserzeichen und die darin enthaltenen Echtheitsinformationen weiterhin nachweisbar.

Durch die Erfindung ist es erstmals möglich, die Echtheit von Dokumenten in automatisierten Geschäftsprozessen auch nach dem Medienbruch, also durchgängig zu gewährleisten. Dies erschließt den Trust Center-Kunden, zum Beispiel bei der Gestaltung ihrer automatisierten Geschäftsprozesse neben dem Aspekt erhöhter Sicherheit einen enormen Zusatznutzen in Form von Potentialen wie Effizienzsteigerung, Rationalisierung und Kostensenkung. Die privaten Kunden und Anwender solcher Dienste haben weiterhin das Vertrauen und die Vorteile von der papiergebundenen Version eines Dokumentes, ohne auf die Vorteile der digitalen Version verzichten zu müssen.

Ein Einsatz der Erfindung ist insbesondere bei solchen Anwendungen vorteilhaft, bei denen die Echtheit von Willenserklärungen und Dokumenten gewährleistet sein soll. Hierzu gehört beispielsweise der Bereich der öffentlichen Verwaltung.

Der Begriff e-Government steht für die Nutzung von netzbasierten Technologien innerhalb einer Behörde, im Verkehr mit anderen Behörden und mit den Abnehmern öffentlicher Dienstleistungen (Privatkunden, beziehungsweise Firmenkunden) mit dem Ziel, zu kommunizieren oder Leistungen auszutauschen. Darunter wird insbesondere der Einsatz von Datenkommunikationsnetzen wie Internet, Extranet, Intranet sowie Electronic Data Interchance (EDI) verstanden.

Die Erfindung ermöglicht eine Optimierung von Geschäftsprozessen, eine Verbesserung der internen und externen Zusammenarbeit und eine verstärkte Bürgerorientierung der Verwaltung.

Überall dort, wo Bürger, Firmen und Institutionen amtliche Dokumente von einer Behörde erhalten, Anträge unterschreiben oder Belege und Dokumente einreichen wollen, liegen bevorzugte Einsatzmöglichkeiten für die Trusted Digital Watermark-Lösung vor.

Die Erfindung schafft die Voraussetzungen für durchgängige e-Government-Prozesse.

Beispielsweise können durch den Einsatz der Erfindung sicher und zuverlässig Dokumente wie beglaubigte Kopien von Geburtsurkunden oder Grundbucheintragungen angefordert werden. Vorzugsweise wird dabei ein Gesamtsystem implementiert, bei dem einzelne Personen Nutzungsrechte durch Anmeldung erhalten. Bevorzugte physikalische Mittel zur Umsetzung der digitalen Signatur sind Kartenlesegeräte, Signaturkarten und Verschlüsselungs- und Wasserzeichenmarkierungssoftware.

Beispielsweise sendet ein Bürger eine signierte e-mail mit einer Anfrage an eine Behörde. Die Behörde bearbeitet die Anfrage als einen Antrag und übermittelt die signierten und mit einem digitalen Wasserzeichen versehenen Dokumente, beispielsweise per e-mail. Die Dokumente können sowohl elektronisch weiter übermittelt als auch ausgedruckt werden. Dank digitaler Wasserzeichen handelt es sich dabei jeweils um ein Original, da das Wasserzeichen als Amtssiegel gelten kann. Kopien können sowohl durch Vervielfältigung der Ausdrucke als auch durch Vervielfältigung der Daten, beziehungsweise ihre wiederholte Übermittelung gewonnen werden.

Der umgekehrte Weg, dass ein Bürger Dokumente in digitaler und signierter Form an eine Behörde übermittelt, ist gleichfalls Bestandteil bevorzugter Ausführungsformen der Erfindung. Hierbei können die zu signierenden und übermittelnden Dokumente sowohl in digitaler Form vorliegen und anschließend signiert werden als auch vorher beispielsweise in Papierform vorliegen und durch Scannen zunächst in digitale Dokumente überführt werden.

Die erfindungsgemäß beglaubigten Dokumente können in einem komplexen Gesamtsystem eingesetzt werden. Beispielsweise startet ein Bearbeitungsprozess durch einen elektronischen Antrag, eine elektronische interne Anweisung oder auf Grund eines elektronisch überwachten Ereignisses wie der Geschwindigkeitsübertretung eines Kraftfahrers.

In diesem Prozess wird vorzugsweise wenigstens ein digitales Textdokument erzeugt. Das digitale Textdokument wird vom Kunden mit seiner digitalen Signatur beglaubigt und anschließend mit der Signatur markiert. Das Passwort für die Markierung wird aus dem Hashwert über das Dokument gebildet. Danach erfolgt eine weitere Markierung mit einem öffentlichen Wasserzeichen, das Informationen über die "ausstellenden Kunden", den "zuständigen Sachbearbeiter", die "Dokumentenart", das "Datum" und das "Trust Center" enthält.

Das digitale Dokument kann entweder verschlüsselt und digital signiert per e-mail, Diskette oder in Papierform per Post an den Antragsteller versendet werden. Die Versendung in Papierform hat für den Empfänger den Nachteil, dass er das Dokument ebenfalls einscannen und nachbearbeiten muss.

Der Behördenkunde liest das öffentliche und geheime Wasserzeichen aus und prüft durch eine Anfrage beim Trust Center die Echtheit und Integrität des Dokumentes.

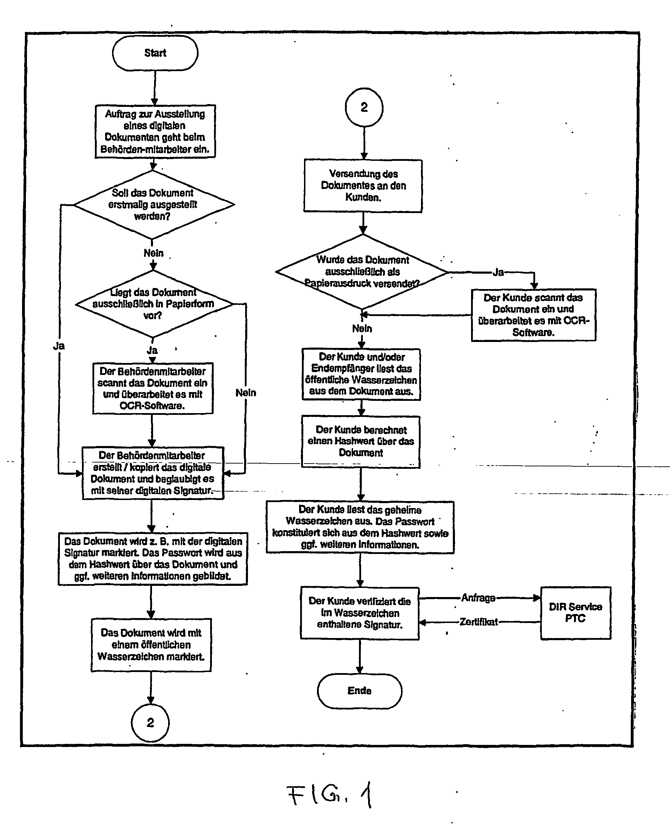

Eine Prinzipdarstellung eines bevorzugten Verfahrens zur Ausstellung von digitalen Dokumenten ist in Fig. 1 dargestellt. In der Prinzipdarstellung eingesetzte Begriffe sind in ihrer allgemeinsten Form zu verstehen. Insbesondere dort, wo Personen aufgeführt sind, kann an Stelle der Person ein spezieller Computer oder eine spezielle Softwareroutine treten.

Beispielsweise können Softwareagenten eingesetzt werden.

Softwareagenten, die auch als intelligente Agenten bezeichnet werden, werden vorzugsweise durch Softwareeinheiten gebildet, welche ihre Umwelt überwachen und automatisch handeln. Im dargestellten Fall handelt ein Softwareagent für die Behörde und ein anderer Softwareagent für einen Kunden der Behörde.

Bevorzugte Verfahrensschritte werden nachfolgend anhand von Fig. 1 dargestellt.

Der in Fig. 1 dargestellte Bearbeitungsvorgang startet mit Eingang eines Auftrages zur Ausstellung eines digitalen Dokumentes bei dem Server einer Behörde.

Anhand des Auftrages überprüft der Server, ob es sich um ein erstmals auszustellendes Dokument handelt.

Falls das Dokument erstmals ausgestellt werden soll, erstellt, beziehungsweise kopiert, der für den Behördenmitarbeiter arbeitende Softwareprozess das digitale Dokument. Der Behördenmitärbeiter beglaubigt das Dokument mit seiner digitalen Signatur.

Falls das Dokument bereits zuvor ausgestellt wurde, wird zunächst überprüft, ob das Dokument ausschließlich in Papierform vorliegt. Falls das Dokument ausschließlich in Papierform vorliegt, wird es eingescannt und mit einer optischen Erkennungssoftware (Optical Character Recognition - OCR) überarbeitet. Das so erstellte Dokument wird ebenfalls mit einer digitalen Signatur beglaubigt und anschließend mit einem öffentlichen Wasserzeichen markiert und an den Kunden, der es angefordert hatte, versendet.

Die Bearbeitung des Dokumentes bei dem Kunden erfolgt in Abhängigkeit davon, ob das Dokument ausschließlich als Papierausdruck oder auch in digitaler Form versendet wurde.

Für den Fall, dass das Dokument ausschließlich als Papierausdruck versendet wurde, wird das Dokument eingescannt und mit einer OCR-Software bearbeitet.

Aus dem in digitaler Form übermittelten, beziehungsweise aus dem nachträglich in digitale Form überführten Dokument, wird das öffentliche Wasserzeichen ausgelesen.

Anschließend wird der Hashwert bestimmt. Danach wird das geheime Wasserzeichen ausgelesen.

Anschließend verifiziert der Kunde die in dem Wasserzeichen enthaltene Signatur. Die Verifikation erfolgt vorzugsweise durch eine insbesondere automatisierte Anfrage bei einem Trust-Center PTC. Das Trust-Center ermöglicht eine Überprüfung der in dem Wasserzeichen enthaltenen digitalen Signatur, vorzugsweise indem es auf sichere Weise Informationen über den Status des Zertifikats zu dem Zeitpunkt der Signaturerstellung bereitstellt.

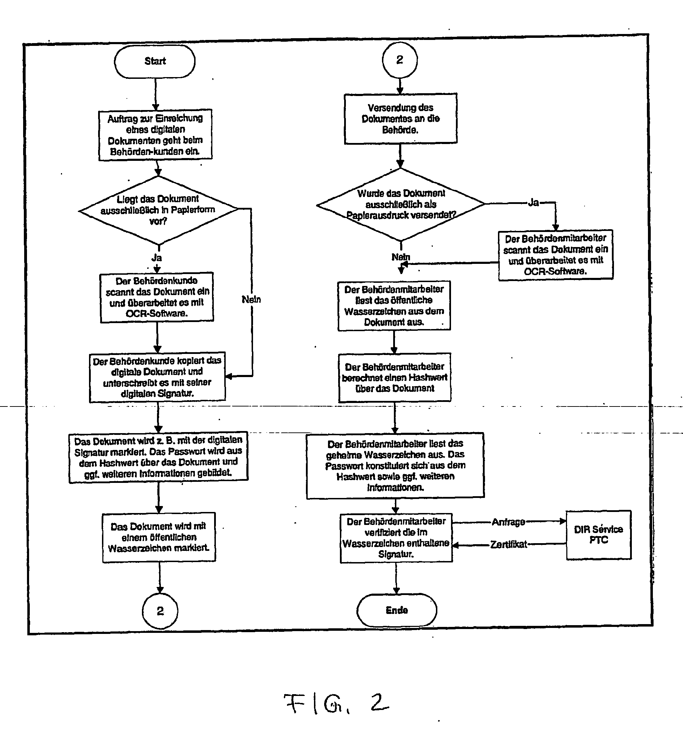

Ein weiteres Anwendungsbeispiel der Erfindung wird nachfolgend anhand von Fig. 2 dargestellt.

Hier kommen vorzugsweise die gleichen Verfahrensschritte zum Einsatz, wie zuvor anhand von Fig. 1 dargestellt.

Es handelt sich hierbei jedoch um Dokumente, die von dem Kunden der Behörde zu erstellen sind. Beispielsweise kann ein Bürger seine Steuererklärung elektronisch erstellen, mit einer digitalen Signatur versehen und anschließend an das zuständige Finanzamt weiterleiten.

Die bei diesen, beziehungsweise bei gleichartigen Prozessen vorzugsweise eingesetzten Verfahrensschritte werden nachfolgend anhand von Fig. 2 näher erläutert.

Hierbei beginnt der Bearbeitungsprozess damit, dass eine Behörde einen Kunden beauftragt, ein digitales Dokument einzureichen. In einem voll automatisierten Verwaltungsprozess kann dies automatisch geschehen. Beispielsweise können Finanzämter Aufforderungen zur Erstellung von Steuererklärungen automatisiert per e-mail an die jeweiligen Bürger senden. Öffentliche Angebote, wie beispielsweise die Präsentation einer Ausschreibung im Internet stellen gleichfalls derartige Aufforderungen dar.

Es ist jedoch nicht erforderlich, dass die Behörde zunächst einen Auftrag erteilt. Durch offenkundige Vorbenutzung ist es beispielsweise bekannt, dass bei einzelnen Patentämtern Patentanmeldungen in einer verschlüsselten Form übermittelt werden können. Die Erfindung ermöglicht jedoch eine erheblich höhere Manipulationssicherheit der eingereichten Anmeldetexte.

Ein bei dem Kunden der Behörde vorhandenes digitales Dokument wird kopiert und mit der digitalen Signatur unterschrieben.

Zuvor nicht in digitaler Form vorliegende Dokumente werden zunächst digitalisiert.

Nach dem Versehen des Dokumentes mit der digitalen Signatur wird das Dokument mit einem öffentlichen Wasserzeichen markiert und anschließend an die Behörde versendet, wobei die Versendung selbstverständlich auch auf einem ungesicherten Weg, zum Beispiel als e-mail erfolgen kann.

Ein Versand als Papierdokument ist gleichfalls möglich, jedoch ist ein Versand in ausschließlich elektronischer Form bevorzugt, da hierbei der Schritt des Einscannens entfällt.

In einem nächsten Bearbeitungsschritt liest der Computer des Behördenmitarbeiters das öffentliche Wasserzeichen aus dem Dokument aus.

Der Computer des Behördenmitarbeiters berechnet einen Hashwert aus dem Dokument.

Der Computer des Behördenmitarbeiters liest ferner das geheime Wasserzeichen aus.

Anschließend verifiziert der Behördenmitarbeiter die in dem Wasserzeichen enthaltene Signatur. Die Verifizierung erfolgt vorzugsweise unter Einsatz einer Anfrage bei einem Trust-Center. Hiermit liegt ein Beweis der Echtheit des Dokumentes vor.

Die zuvor dargestellte Überprüfung der Echtheit von Dokumenten kann gleichfalls im geschäftlichen oder privaten Bereich eingesetzt werden, beispielsweise, um Bestellvorgänge zu sichern oder um die digital signierten Urkunden an Schreiben anhängen zu können, beispielsweise digital signierte Zeugnisurkunden an Bewerbungen.

Der Vorgang der Bestätigung der Echtheit wird verwendet, um die Übereinstimmungen einer Kopie mit dem zugehörigen Originaldokument garantieren zu können. Durch den gemeinsamen Einsatz von digitalen Wasserzeichen und den Diensten eines signaturgesetzkonformen Trust Centers kann eine entsprechende, digitale Methode konstruiert werden. Die Bestätigung der Echtheit wird hierbei nicht wie im traditionellen Sinne durch eine physische Markierung wie beispielsweise durch einen Stempel oder ein Siegel, sondern durch eine geeignete Markierung eines Dokumentes realisiert.

Zusätzlich zu der Markierung wird ein beglaubigtes Dokument mit einer kleinen Grafik gekennzeichnet, zum Beispiel einem Emblem des Ausstellers. Auf dieser Grafik können zum Zwecke der Visualisierung der Bestätigung der Echtheit Informationen wie Name des Ausstellers, Datum, etc. im Klartext aufgebracht werden. Darüber hinaus dient die Grafik als Trägermedium für die am Workflow beteiligten digitalen Wasserzeichen.

Ein Vorteil einer derartigen Bestätigung des Echtheitsdienstes besteht darin, dass ein einmal beglaubigtes Dokument beliebig oft kopiert werden kann, wobei bezüglich jeder Kopie die Übereinstimmung mit dem Original beweisbar ist. Neben dem Trust Center als vertrauenswürdiger Instanz ist an dem Workflow eine Bescheinigungsstelle beteiligt, die die Bestätigung der Echtheit durchführt.

In der nachfolgenden beispielhaften Tabelle sind an einer Echtheitsbestätigung mögliche Beteiligte dargestellt.

| **Akteur** | **Abkürzung** | **Bemerkung** |
|---|---|---|
| Trust Center | PTC | Vertrauenswürdige Instanz, welche das für die Bestätigung der Echtheit notwendige Verschlüsselungssystem mit öffentlichen Schlüsseln zur Verfügung stellt |
| Bescheinigungsstelle | - | Bescheinigungsstelle (zum Beispiel ein Notar), die die Bestätigung der Echtheit durchführt |
| Kunde | - | Auftraggeber der Bestätigung der Echtheit |
| Empfänger | - | Empfänger einer beglaubigten Kopie |

Der dargestellte Ablauf beinhaltet vorzugsweise mehrere der nachfolgend dargestellten Elemente, wobei ein Einsatz aller Merkmale besonders zweckmäßig ist.

Es ist zweckmäßig, dass sowohl die Bescheinigungsstelle als auch der Kunde über eine Signaturkarte verfügen. Vorzugsweise verfügen sowohl die Bescheinigungsstelle als auch der Kunde über eine Software zum Lesen von digitalen Wasserzeichen und zur optischen Charaktererkennung (OCR), die in der Lage ist, Dokumente, die in Papierform vorliegen, in Textform zu transformieren.

Vorzugsweise setzt die Bescheinigungsstelle eine Grafik ein, die eine Bestätigung der Echtheit symbolisiert. Beispielsweise kann es sich hierbei um eine grafische Wiedergabe des Dienstsiegels der Bescheinigungsstelle handeln. Vorzugsweise ist die Grafik so gestaltet, dass sie in einem digitalen Wasserzeichen eine ausreichende Menge an Information aufnehmen kann.

Um sicherzustellen, dass die Grafik des die Echtheit bestätigenden Symbols eine ausreichende Menge an Information aufnehmen kann, wird vorzugsweise eine möglichst komplexe Grafik eingesetzt. Die Fähigkeit der Grafik, ein digitales Wasserzeichen aufnehmen zu können, wird vorzugsweise in einem vorhergehenden Zulassungsprozess überprüft.

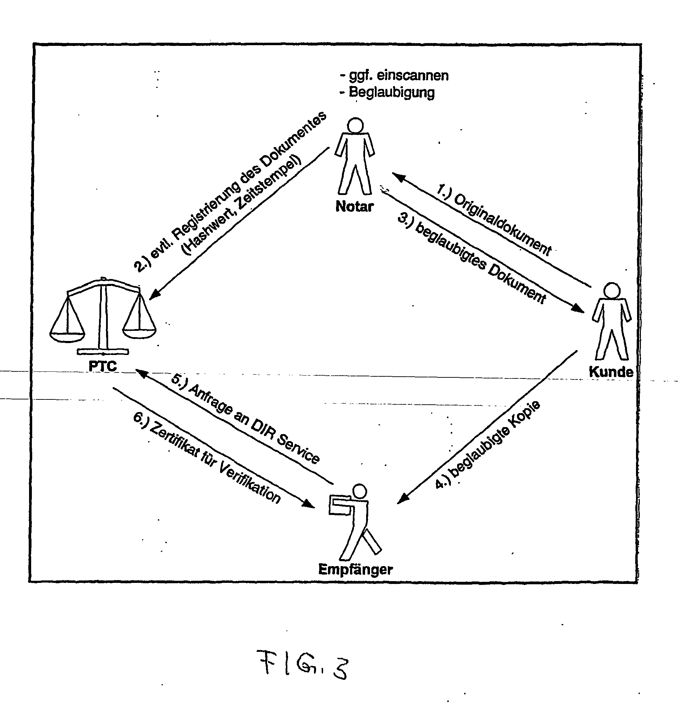

In Fig. 3 ist ein Überblick von Verfahrensschritten zur Beglaubigung von Dokumenten dargestellt. Hierbei wirkt ein Notar als Bescheinigungsstelle zur Beglaubigung der Echtheit eines Originaldokumentes. Eine Registrierung des Dokumentes kann in einem Trust-Center PTC erfolgen. Das beglaubigte Dokument kann anschließend an einen oder mehrere Empfänger übermittelt werden. Das Vorhandensein einer Registrierung des Dokumentes in dem Trust-Center PTC erfolgt durch eine Anfrage des Empfängers bei dem Trust-Center PTC.

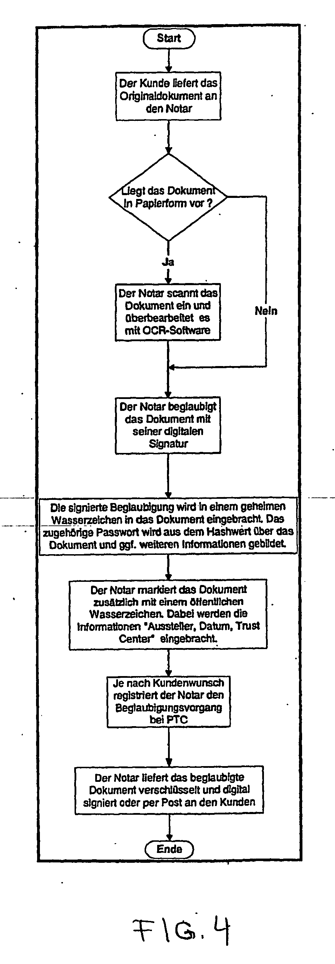

In Fig. 4 ist ein bevorzugtes Verfahren zur Beglaubigung eines Dokumentes dargestellt.

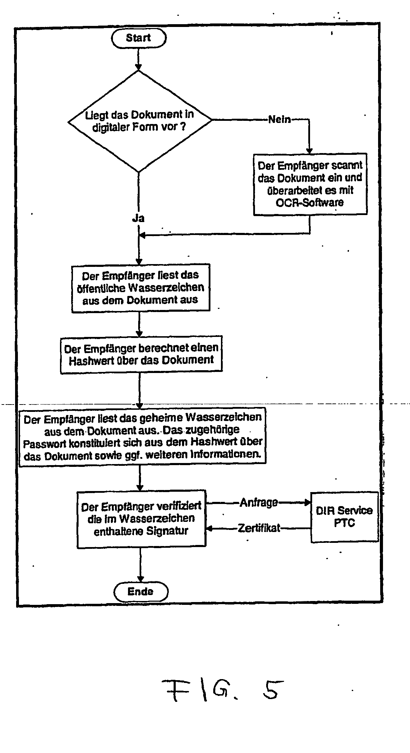

Der umgekehrte Weg der Verifikation eines beglaubigten Dokumentes ist in Fig. 5 beispielhaft wiedergegeben. Ein bevorzugter Ablauf der Bestätigung der Echtheit eines Originaldokumentes beginnt bei dem Kunden, der die Bestätigung der Echtheit in Auftrag gibt. Er liefert zunächst das Originaldokument an eine Bescheinigungsstelle, beispielsweise einen Notar. Je nachdem, ob das Dokument in Papier- oder in digitaler Form vorliegt, erfolgt die Lieferung persönlich, per Post oder per e-mail. Im Fall der Lieferung per e-mail muss die elektronische Nachricht verschlüsselt und digital signiert werden, damit die Integrität sowie der Ursprung des Dokumentes sichergestellt ist. Weiterhin sollte in diesem Fall das Dokument über eine digitale Signatur verfügen, welche die Echtheit und die Unverfälschtheit des Dokumentes bestätigt (etwa im Fall eines zu Echtheit bestätigenden Zeugnisses die digitale Signatur des Ausstellers).

Falls das Dokument in Papierform vorliegt, sollte die Bescheinigungsstelle zunächst durch Einscannen und Bearbeiten mit OCR-Software den zugehörigen ASCII-Text des Dokumentes gewinnen, um die Bestätigung der Echtheit durchführen zu können. Die Bestätigung der Echtheit des Dokumentes wird dann durch digitales Signieren eines definierten Satzes durch die Bescheinigungsstelle realisiert. Die Grafik der Bescheinigungsstelle dient als Trägermedium eines geheimen digitalen Wasserzeichens, das als Information den Satz und die zugehörige digitale Signatur aufnimmt. Sie wird in sichtbarer Form auf dem Dokument aufgebracht, wodurch der Vorgang der Echtheitsbestätigung auch eine visuelle Kennzeichnung erhält. Anschließend kann die Bescheinigungsstelle weitere, insbesondere nicht besonders zu schützende Informationen in das öffentliche Wasserzeichen einbringen. Beispiele für derartige Informationen sind der Name der Bescheinigungsstelle, das Datum der Bestätigung der Echtheit und der Name des beteiligten Trust-Centers.

Hiermit ist die Bestätigung der Echtheit beendet. Je nach Wunsch des Kunden besteht nun die Möglichkeit, das beglaubigte Dokument beim Trust Center registrieren zu lassen. Zu diesem Zweck sendet die Bescheinigungsstelle den Hashwert über das Dokument an das Trust Center und lässt dort einen Zeitstempel über die Daten generieren. Diese optionale Registrierung stellt einerseits für den Kunden ein zusätzliches Beweismittel der Bestätigung des Echtheitsvorgangs dar. Andererseits kann die Bescheinigungsstelle über die Registrierung ihrer Ablagepflicht nachkommen.

Die Bescheinigungsstelle liefert abschließend das beglaubigte Dokument verschlüsselt und digital signiert an den Kunden aus. Alternativ kann die Übergabe des Dokumentes auch persönlich unter Zuhilfenahme eines geeigneten Datenträgers erfolgen.

Der Kunde kann nun beliebig viele Kopien des Originaldokumentes anfertigen und verteilen, da es in digitaler Form vorliegt. Bezüglich jeder Kopie ist die Übereinstimmung mit dem Original beweisbar, wie die folgenden Darlegungen zeigen.

Die Erfindung verhindert, dass gefälschte Dokumente als echt anerkannt werden.

Für die die Echtheit bestätigende Beglaubigungsstelle besteht zunächst natürlich die Möglichkeit, ein Dokument zu verändern, bevor sie es beglaubigt. Aus diesem Grund muss dem Kunden explizit mitgeteilt werden, dass er jedes beglaubigte Dokument prüfen muss, bevor er es verteilt. Aufgetretene Änderungen können dann bei der Bescheinigungsstelle beanstandet werden.

Die dargestellten bevorzugten Ausführungsformen ermöglichen eine flexible Kombination von digital signierten Dokumenten oder beglaubigten Kopien, sowohl in digitaler als auch in analoger (ausgedruckter) Form.

Das erfindungsgemäße Verfahren, mit Hilfe eines digitalen Wasserzeichens eine digitale Unterschrift gegen Medienbrüche resistent zu machen, ist nicht auf die Bestätigung der Echtheit von Dokumenten beschränkt. Das Prinzip kann beispielsweise auch dann angewendet werden, wenn ein Dokumentersteller Dokumente in großer Anzahl ausgibt, deren Echtheit durch eine Unterschrift bestätigt sein muss. Beispiele hierfür sind Diplomurkunden, Arbeitszeugnisse, Steuerbescheide, Kontoauszüge oder Geburtsurkunden.

In diesen Szenarien kann der Dokumentenersteller die Echtheit der Dokumente durch eine digitale Signatur bestätigen, die durch Einbettung in ein digitales Wasserzeichen auch Medienbrüche übersteht. Die Dokumente können demnach ausgedruckt und später zum Zweck der Verifikation eingescannt und über OCR-Software in eine ASCII-Version transformiert werden. Diese Vorgehensweise besitzt gegenüber der traditionellen Methodik den Vorteil, dass zusätzlich zur Echtheit auch die Integrität der ausgegebenen Dokumente verifizierbar ist.

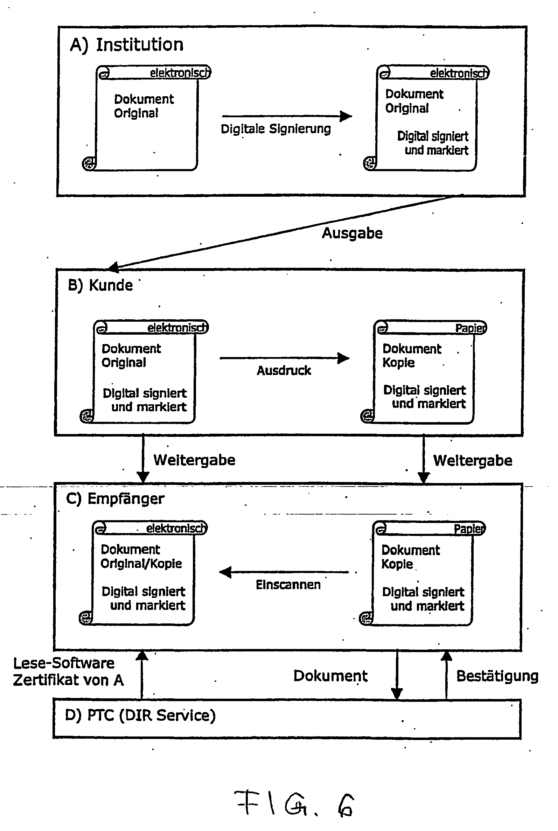

Ein bevorzugtes Verfahren zur Ausgabe von mehreren Dokumenten, insbesondere zum Kopieren von Dokumenten und zur Massenausgabe von Dokumenten, wird nachfolgend anhand von Fig. 6 dargestellt.

Ein Dokumentaussteller A fertigt das Original eines Dokumentes, versieht es mit einer digitalen Signierung und markiert dieses Dokument mit einem Wasserzeichen.

Das ausgegebene elektronische Dokument wird an einen Kunden B weitergeleitet, der das elektronische Dokument unmittelbar an einen Empfänger C weitergibt und/oder das Dokument ausdruckt und das Papierdokument wiedergibt.

Der Empfänger C erhält das elektronische Dokument, eine Kopie des elektronischen Dokumentes oder eine Kopie des Papierdokumentes. Alle Originale, beziehungsweise Kopien, sind digital signiert und markiert, so dass auch die einzelnen Kopien die Funktion von Originalen erfüllen.

Zur Erhöhung der Datensicherheit ist eine Überprüfung durch ein Trust-Center D zweckmäßig. Das Trust-Center stellt in dem dargestellten Fall dem Empfänger C eine Software zum Lesen des von A erstellten Zertifikats zur Verfügung. Außerdem bestätigt das Trust-Center D die Echtheit eines oder mehrerer der übermittelten Dokumente.

Über das geheime Wasserzeichen wird die digitale Signatur der ausstellenden Institution in das Dokument eingebracht. Zusätzlich wird eine sichtbare Grafik des Ausstellers auf dem Dokument aufgebracht, die insbesondere den Namen des Ausstellers enthält. Weitere Daten (etwa Datum der Ausstellung, Trust Center) können mit Hilfe eines öffentlichen Wasserzeichens in das Dokument geschrieben werden.

Mit Hilfe der Erfindung ist auch eine Realisation eines elektronischen Tresors, der nachfolgend als e-safe bezeichnet wird, möglich.

Der e-Safe, der zusätzlich auch als "m-Safe" ("mobile safe") durch die Einbindung von mobilen Benutzereinheiten wie Mobilfunkgeräten oder digitalen Assistenten realisiert werden kann, ist ein elektronisches Schließfach für verschiedene digitale Dokumente wie Rechnungen, Kontoauszüge, Quittungen, Verträge, etc.

Dieses elektronische Archiv ermöglicht durch die

Verschlüsselung und digitale Signierung seiner Inhalte eine rechtsverbindliche und jederzeit nachvollziehbare Dokumentation. Der Kunde organisiert seinen e-Safe über einen Internet-, Telefon-, Fax- beziehungsweise Mobil-Zugang und legt seine wichtigen Dokumente (direkt oder indirekt zum Beispiel nach einem Scanvorgang) in einer selbstdefinierten, hierarchischen Verzeichnisstruktur ab.

Der weltweite und damit ortsunabhängige Zugriff auf den e-Safe erfolgt ebenfalls über einen der oben genannten Kommunikationskanäle. Dabei können spezielle, mitunter als "Notfalldokumente" gekennzeichnete, digitale Schriftstücke kostenlos weltweit per Fax abgerufen werden. So werden unter anderem Verhandlungen mit ausländischen Kunden bei Verlust der Papiere (Personalausweis, Reisepass) oder bei der Notwendigkeit zur Einsichtnahme in Dokumente, wie beispielsweise den Impfpass, erheblich vereinfacht. Weitere Anwendungen des e-Safes umfassen Erinnerungsfunktionen (zum Beispiel via SMS) sowie die Ermöglichung eines "Weltpostfachs".

Die Integration von digitalen Signaturen und die Einbettung der digitalen Signatur als Wasserzeichen, welches Medienbrüche überwindet, ermöglicht die Realisierung von zuverlässigen elektronischen Tresoren.

Als ganzheitliches e-Safe-Konzept ist die Einbeziehung von Diensten des e-Governments und weiterer Institutionen wie Banken, Versicherungen, Telekommunikationsunternehmen etc. zu nennen. Diese erhalten einen ausschließlichen Schreibzugriff auf das elektronische Archiv, um dort Urkunden, Bestätigungen der Echtheit, Rechnungen, Versicherungspolicen etc. direkt ablegen zu können.

Bei der Darstellung der bevorzugten Ausführungsbeispiele wird der Begriff "Hashwert" als Kurzschreibweise für "secure hash" verwendet. Unter einem "secure hash" ist insbesondere die Ausgabe einer Einwegfunktion zu verstehen.

Eine besonders zweckmäßige Weiterbildung der Erfindung beinhaltet eine Integration eines Zeitstempels. Die Integration des Zeitstempels, der vorzugsweise durch ein Trust-Center bereitgestellt wird, liefert einen Beweis für die Urheberschaft des Dokumentes, weil erkennbar ist, wer als Erster ein Dokument mit einer digitalen Signatur versehen hat.

Als Instrument des Urheberrechtsschutzes ist ein robustes digitales Wasserzeichen ein geeignetes Mittel zur Kennzeichnung von Dokumenten. Die beiden Eigenschaften Robustheit und Nicht-Wahrnehmbarkeit sind von zentraler Bedeutung.

Ferner trägt die Anwendung des Trusted Digital Watermarking dazu bei, die Integrität des Dokumentinhalts sowie die Identität des Erstellers sicherzustellen. Diese Variante der Erfindung lässt sich ebenso wie die anderen Varianten der Erfindung sowohl durch fest verdrahtete Schaltungen als auch durch geeignete Softwareroutinen realisieren.
Eine weitere Anwendung der Technologie liegt in dem Schutz von Dokumenten, die hochsensitive Informationen enthalten. So besteht beispielsweise die Möglichkeit, die betroffenen Dokumente mit einem geheimen oder auch zusätzlich mit einem öffentlichen Wasserzeichen zu markieren.

Die dargestellten Ausführungsformen der Erfindung sind besonders vorteilhaft. Der Fachmann entnimmt den dargestellten Beispielen die Anregung, die eingesetzten Mechanismen zur Erhöhung der Sicherheit und zur Überprüfung von Sicherheitsmerkmalen auch in anderen Anwendungen entsprechend einzusetzen.

## Patentansprüche

1. Verfahren zur Bestätigung der Echtheit eines Dokumentes, bei dem das Dokument mit einer dem Verfasser zugeordneten digitalen Signatur und mit einem digitalen Wasserzeichen versehen wird, wobei die Echtheit der Signatur in einem Überprüfungsschritt durch ein Trust-Center überprüft werden kann, **dadurch gekennzeichnet, dass** die Signatur mit einem geheimen Schlüssel durchgeführt wird und in einem mit einem eine für das Dokument charakteristische Information enthaltenden Schlüssel auslesbaren digitalen Wasserzeichen in das Dokument eingebracht wird.

2. Verfahren nach Anspruch 1, bei dem das Dokument zusätzlich mit einem mit einem öffentlichen Schlüssel auslesbaren Wasserzeichen markiert wird.

3. Verfahren nach Anspruch 2, bei dem die für das Dokument charakteristische Information einen Hashwert beinhaltet.

4. Verfahren nach einem der Ansprüche 1 bis 3, bei dem die Vornahme der Bestätigung der Echtheit in einer separaten Datei gespeichert wird.

5. Verfahren nach Anspruch 4, bei dem die Datei und/oder die beglaubigten Daten an ein Trust-Center übermittelt wird.

6. Verfahren nach Anspruch 5, wobei in dem Trust-Center überprüft wird, ob die digitale Signatur zu einer Person gehört die zu einer Bestätigung der Echtheit von Dokumenten befugt ist.

7. Verfahren nach Anspruch 6, bei dem überprüft wird ob Angaben zu der Person in einer separaten Liste gespeichert sind.

8. Verfahren nach Anspruch 6 oder 7, bei dem das Trust-Center eine Bestätigung über die Berechtigung des Inhabers der Signatur zur Bestätigung der Echtheit von Dokumenten erstellt.

9. Verfahren nach Anspruch 8, bei dem das Trust-Center die Daten zur Bestätigung der Berechtigung des Bescheinigenden signiert.

10. Verfahren nach einem der Ansprüche 2 bis 9, bei dem ein mit einem geheimen Schlüssel auslesbares Wasserzeichen in das mit einem öffentlichen Schlüssel auslesbare Wasserzeichen eingebracht wird.

11. Verfahren nach Anspruch 10, bei dem das mit einem geheimen Schlüssel auslesbare Wasserzeichen Meta-Informationen enthält.

12. Verfahren nach einem der Ansprüche 2 bis 11, bei dem das mit einem öffentlichen Schlüssel auslesbare Wasserzeichen in einem graphischen Symbol eingebettet ist, wobei das graphische Symbol erkennbar die Authentizität des Dokumentes bestätigt und wobei das graphische Symbol soviel Informationen aufnehmen kann wie das Wasserzeichen an sicherheitsrelevanten Informationen.

13. Verfahren nach einem der Ansprüche 2 bis 11 bei dem, bevor das Dokument zusätzlich mit dem mit einem öffentlichen Schlüssel auslesbaren Wasserzeichen markiert wird, überprüft wird ob das mit einem öffentlichen Schlüssel auslesbare Wasserzeichen eine ausreichende Menge an Sicherheitsinformationen aufnehmen kann.

14. Verfahren nach einem der Ansprüche 1 bis 13, bei dem der Zeitpunkt der Bestätigung der Echtheit von Daten erfasst wird.

15. Verfahren nach Ansprüchen 10 und 14, bei dem der Zeitpunkt in das geheime Wasserzeichen eingebracht wird.

16. Verfahren nach Anspruch 14 oder 15, bei dem der Zeitpunkt durch einen digitalen Zeitstempel beglaubigt wird.

17. Verfahren nach Anspruch 16, bei dem die Beglaubigung des Zeitpunktes durch den digitalen Zeitstempel in einem Trust-Center erfolgt.

18. Verfahren nach einem der Ansprüche, 1 bis 17, bei dem die Daten, deren Echtheit bestätigt wurde, in einer Datenbank gespeichert werden.

19. Verfahren nach Anspruch 18, wobei das Trust-Center die Datenbank beinhaltet.

20. Verfahren nach einem der Ansprüche 1 bis 19, bei dem die Bestätigung der Echtheit des Dokumentes mit verschiedenen Sicherheitsstufen durchgeführt wird.

21. Verfahren nach Anspruch 20, bei dem höhere Sicherheitsstufen durch eine höhere Anzahl von Verifikationselementen erzielt werden.

22. Verfahren nach Anspruch 21, bei dem unterschiedliche Granularitäten der Verifikationselemente eingesetzt werden.

23. Verfahren nach einem der Ansprüche 1 bis 22, bei dem ein message digest in das Dokument und/oder in das geheime Wasserzeichen eingebracht wird.

24. Elektronisches Dokument welches durch ein Verfahren nach einem der Ansprüche 1 bis 23 bearbeitet wurde.

## Claims

1. A method for confirming the authenticity of a document, wherein the document is provided with a digital signature being assigned to the author and with a digital watermark, whereby the authenticity of the signature can be verified in a verifying step by a trust center, **characterized in that** the signature is executed by means of a secret key and entered into the document in a digital watermark that can be read out by a key which contains an information being characteristic for the document.

2. A method according to claim 1, wherein the document is additionally marked with a watermark that can be read out by a public key.

3. A method according to claim 2, wherein the information being characteristic for the document comprises a Hash value.

4. A method according to one of claims 1 to 3, wherein the execution of confirming the authenticity is stored in a separate file.

5. A method according to claim 4, wherein the file and/or the certified data are transmitted to a trust center.

6. A method according to claim 5, wherein it is checked in the trust center whether the digital signature belongs to a person who is authorized to confirm the authenticity of documents.

7. A method according to claim 6, wherein it is checked, whether indications concerning the person are stored in a separate list.

8. A method according to claim 6 or 7, wherein the trust center confirms that the person to whom the signature belongs is authorized to confirm the authen-ticity of documents.

9. A method according to claim 8, wherein the trust center signs the data for confirming the authorization of said person.

10. A method according to any one of claims 2 to 9, wherein a watermark which may be read out by a secret key is entered into that watermark which may be read out by a public key.

11. A method according to claim 10, wherein the watermark which can be read out by a secret key contains meta-information.

12. A method according to any one of claims 2 to 11, wherein the watermark which can be read out by a public key is embedded within a graphic symbol, whereby the graphic symbol confirms the authenticity of the document in recognizable manner and whereby the graphic symbol may adopt as much of information as the watermark may adopt information of security relevance.

13. A method according to any one of claims 2 to 11, wherein before marking the document additionally with a watermark which can be read out by a public key, it is examined whether the watermark that may be read out by the public key can adopt a sufficient amount of security information.

14. A method according to any one of claims 2 to 13, wherein the time of confirming the authenticity of data is detected.

15. A method according to claims 10 and 14, wherein the time is entered into the secret watermark.

16. A method according to claim 14 or 15, wherein the time is certified by a digital time stamp.

17. A method according to claim 16, wherein the cerfitication of the time is performed by the digital time stamp in a trust center.

18. A method occording to any one of claims 1 to 17, wherein the data the authenticity of which was confirmed are stored in a database.

19. A method according to claim 18, wherein the trust center contains the database.

20. A method according to any one of claims 1 to 19, wherein the confirmation of the authenticity of the document is performed with different security levels.

21. A method according to claim 20, wherein higher security levels are achieved by a higher number of verification elements.

22. A method according to claim 21, wherein different granularities of the verification elements are used.

23. A method according to any one of claims 1 to 22, wherein a message digest is entered into the document and/or into the secret watermark.

24. An electronic document which was processed according to any one of claims 1 to 23.

## Revendications

1. Procédé pour la confirmation de l'authenticité d'un document, dans lequel le document est pourvu d'une signature numérique associée à l'auteur et d'un filigrane numérique, où l'authenticité de la signature peut être vérifiée dans une étape de vérification par un centre de confiance, **caractérisé en ce que** la signature est exécutée avec une clé confidentielle et est introduite dans un filigrane numérique lisible avec une clé contenant une information caractéristique du document.

2. Procédé selon la revendication 1, dans lequel le document est en outre marqué avec un filigrane lisible avec une clé publique.

3. Procédé selon la revendication 2, dans lequel l'information caractéristique du document contient une valeur de hachage.

4. Procédé selon l'une des revendications 1 à 3, dans lequel la réalisation de la confirmation de l'authenticité est enregistrée dans un fichier séparé.

5. Procédé selon la revendication 4, dans lequel le fichier et/ou les données légalisées sont transmis à un centre de confiance.

6. Procédé selon la revendication 5, dans lequel une vérification est effectuée pour déterminer, dans le centre de confiance, si la signature numérique appartient à une personne habilitée à confirmer l'authenticité de documents.

7. Procédé selon la revendication 6, dans lequel une vérification est effectuée pour déterminersi les renseignements sur la personne sont enregistrés dans une liste séparée.

8. Procédé selon la renvendication 6 ou 7, dans lequel le centre de confiance crée une confirmation concernant l'autorisation du propriétaire de la signature à confirmer l'authenticité de documents.

9. Procédé selon la revendication 8, dans lequel le centre de confiance signe les données pour la confirmation de l'autorisation du certifiant.

10. Procédé selon l'une des revendications 2 à 9, dans lequel un filigrane lisible avec une clé confidentielle est introduit dans le filigrane lisible avec une clé publique.

11. Procédé selon la revendication 10, dans lequel le filigrane lisible avec une clé confidentielle contient des méta-informations.

12. Procédé selon l'une des revendications 2 à 11, dans lequel le filigrane lisible avec une clé publique est intégré dans un symbole graphique, où le symbole graphique confirme de manière identifiable l'authenticité du document et où le symbole graphique peut contenir autant d'informations que le filigrane peut contenir d'informations de sécurité.

13. Procédé selon l'une des revendications 2 à 11, dans lequel, avant que le document ne soit en outre marqué avec le filigrane lisible avec une clé publique, une vérification est effectuée pour déterminer si le filigrane lisible avec une clé publique peut contenir une quantité suffisante d'informations de sécurité.

14. Procédé selon l'une des revendications 1 à 13, dans lequel la date de la confirmation de l'authenticité de données est saisie.

15. Procédé selon les revendications 10 et 14, dans lequel la date est introduite dans le filigrane confidentiel.

16. Procédé selon la revendication 14 ou 15, dans lequel la date est légalisée par un horodatage numérique.

17. Procédé selon la revendication 16, dans lequel la légalisation de la date est effectuée par l'horodatage numérique dans un centre de confiance.

18. Procédé selon l'une des revendications 1 à 17, dans lequel les données dont l'authenticité a été confirmée sont enregistrées dans une base de données.

19. Procédé selon la revendication 18, dans lequel le centre de confiance contient la base de données.

20. Procédé selon l'une des revendications 1 à 19, dans lequel la confirmation de l'authenticité du document est exécutée avec différents niveaux de sécurité.

21. Procédé selon la revendication 20, ans lequel des niveaux de sécurité plus élevés sont obtenus à l'aide d'un nombre plus élevé d'éléments de vérification.

22. Procédé selon la revendication 21, dans lequel des granularités différentes des éléments de vérification sont utilisées.

23. Procédé selon l'une des revendications 1 à 22, dans lequel une empreinte numérique est introduite dans le document et/ou dans le filigrane confidentiel.

24. Document électronique qui a été traité par un procédé selon l'une des revendications 1 à 23.
